# EUROPEAN PATENT SPECIFICATION

(11) **EP 2 650 079 B1**
(45) Date of publication and mention of the grant of the patent: **24.09.2014**
(21) Application number: 13162971.9
(22) Date of filing: 09.04.2013
(51) Int. Cl.: B23Q 1/00

(54) **Pallet clamping apparatus for machine tools**
Palettenklemmvorrichtung für Maschinenwerkzeuge
Appareil de serrage de palette pour machines-outils

(30) Priority: 13.04.2012 JP 2012091900
(43) Date of publication of application: 16.10.2013
(73) Proprietor: ASA Electronics Industry Co., Ltd., Kodaira-shi, Tokyo 187-0031 (JP)
(72) Inventor: Asa, Yukihiro, Kodaira-shi, Tokyo 187-0031 (JP)
(74) Representative: Hodsdon, Stephen James

(56) References cited:
- EP-A1- 1 078 713
- EP-A1- 1 437 515
- EP-A2- 0 855 243
- DE-A1- 10 123 271
- JP-A- H08 155 770

## Description

### FIELD OF THE INVENTION

The present invention is related to a pallet clamping apparatus for machine tools and a pallet exchange system having the pallet clamping apparatus for machine tools , particularly, which is connected to a pallet for machine tools mounted machine tool parts.

### BACKGROUND OF THE INVENTION

In Patent Document 1, as a method for attaching a pallet for machine tools against a machine tool, a clamping apparatus is disclosed. The clamping apparatus is to clamp using balls which are provided on a base attached to a table of a machine tool.
Patent Document 1: JPA1996-155770

### DISCLOSURE OF THE INVENTION

### PROBLEM TO BE SOLVED BY THE INVENTION

However, the clamping apparatus disclosed in Patent Document 1 requires messy works such as loading a pallet side with a taper socket and a pull stud. In addition, inevitable wear occurs at the contact portion between a pallet for machine tools and a base by use of a machine tool, as a result, looseness may occur between a pallet for machine tools and a base.

Then, a pallet for machine tools can not be securely attached to a base, as a result, there is a problem that a machining accuracy of machine tool parts mounted on a pallet is lowered.

It is an object of the invention to provide a pallet clamping apparatus for machine tools which is properly loading a base with a pallet side without need for messy works

### MEANS OF SOLVING THE PROBLEMS

In order to preferably solve the above problem or others, a first aspect of the present invention provides s pallet clamping apparatus according to claim 1.

Preferably, in addition, when the hard balls themselves, the groove portions or the recessed portions have worn, then a set of the other hard balls may be changed for a set of the hard balls of a size corresponding to the wear.

A further aspect of the present invention is a pallet for machine tools connected to the pallet clamping apparatus for machine tools, wherein some recessed portions are formed on the bottom corners of the opening located in the center.

In a further aspect of the present invention, a pallet exchange system is provided comprising;
the pallet clamping apparatus for machine tools,
a first holding apparatus for holding a pallet for machine tools mounted machine tool parts prior to being machined by a machine tool
a second holding apparatus for holding a pallet for machine tools mounted machine tool parts after being machined by the machine tool.
a conveying apparatus for conveying a pallet for machine tools held by the first holding apparatus to the pallet clamping apparatus for machine tools, and for conveying the pallet for machine tools to the second holding apparatus after being machined by the machine tool.

### BRIEF DESCRIPTION OF THE DRAWINGS

Fig. 1 is a schematic exploded perspective view of the pallet clamping apparatus for machine tools of the embodiment of the present invention.
Fig. 2 is a cross sectional view and a plan view after assembling the pallet clamping apparatus for machine tools.
Fig. 3 is a cross sectional view and a plan view after assembling the pallet clamping apparatus for machine tools of another embodiment from the pallet clamping apparatus for machine tools shown in Fig. 2.
Fig. 4 is a schematic configuration diagram of pallet exchange system to attach or remove a pallet against the pallet clamping apparatus for machine tools shown in Fig. 1.

### DETAILED DESCRIPTION OF PREFERRED EMBODIMENT

Referring to drawings, embodiments according to the present invention are described hereinafter.

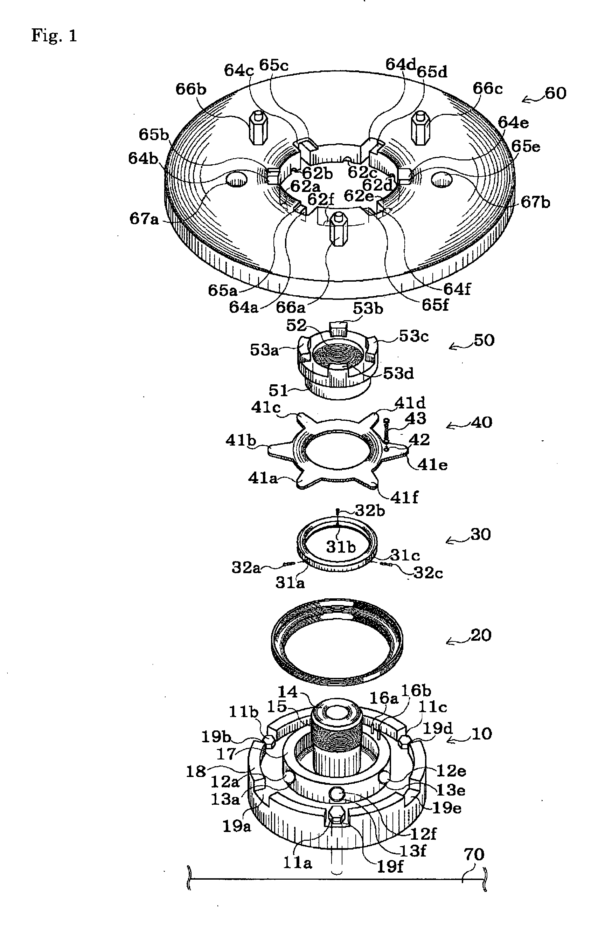

Fig. 1 is a schematic exploded perspective view of the pallet clamping apparatus for machine tools of the embodiment of the present invention. In addition, in Fig 1, a pallet 60 which is detachable to the pallet clamping apparatus for machine tools and a table 70 which is installed the pallet clamping apparatus for machine tools are also appended.

As shown in Fig. 1, the pallet clamping apparatus for machine tools is roughly divided into a base 10, a ball support ring 20, a plate receiving ring 30, a presser plate 40 and a lock nut 50 as described below.

The base 10 is connected with the pallet 60 and is roughly divided into a small cylindrical portion 14, a middle cylindrical portion 17 and a large cylindrical portion 18. The base 10 is formed by appropriate processing such as drilling and cutting against a cylindrical stainless material that the outer diameter corresponds to the large cylindrical portion 18 and the height corresponds to the small cylindrical portion 14 approximately. Therefore the base 10 is integrally formed with the small cylindrical portion 14, the middle cylindrical portion 17 and the large cylindrical portion 18. In addition, each part shown in Fig. 1 uses a material having a desired stiffness such as stainless material except for the ball support ring 20.

The small cylindrical portion 14 is formed in the central portion of the base 10. The small cylindrical portion 14 prevents that the pallet 60 connected to the base 10 is removed from the base 10. On the outer wall of the small cylindrical portion 14, the threaded portion 15 is formed so as to be screwed with the inner wall of a locknut 50. In other word, on the inner wall of the locknut 50, also the threaded portion 52 corresponding to the threaded portion 15 is formed.

The middle cylindrical portion 17 is located so as to surround the small cylindrical portion 14, and is attached balls (hard balls) 12a to 12f in order to connect the pallet 60 against the body of the base 10. On the outer wall of the middle cylindrical portion 17, in order to receive the balls 12a to 12f, for example, dome-shaped or conical groove portions 13a to 13f are formed. In the groove portions 13a to 13f, grease is applied in advance before receiving the balls 12a to 12f.

In addition, in Fig. 1, the number of the balls 12a to 12f and the groove portions 13a to 13f may be determined in consideration of such as the size and the weight of the pallet 60.

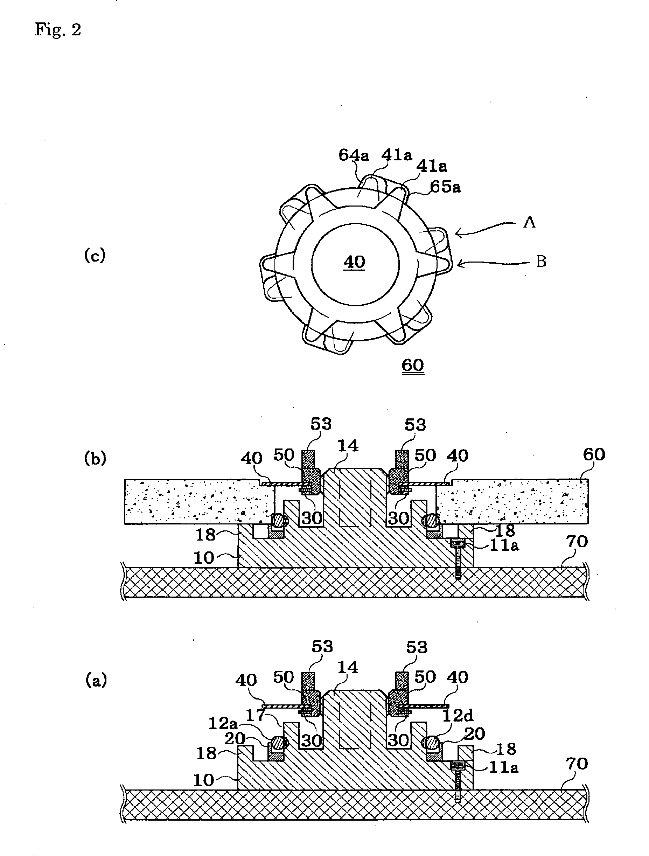

Further, the upper surface of a middle cylindrical portion 17 is formed stoppers 16a and 16b. The stoppers 16a and 16b define the rotation range of the presser plate 40 against the base 10 with a projection 43 extending from the bottom of the presser plate 40. The space between the stoppers 16a and 16b corresponds to the space between Positions A and B in Fig. 2 (c) described later.

When screwing the base 10 and the locknut 50, keeping the presser plate 40 between them, and, in a manner that a projection 43 is located between the stoppers 16a and 16b, the locknut 50 may be rotated against the base 10.

As a result, the rotation range of the presser plate 40 is defined by the projection 43 and Stoppers 16a, 16b. And when loading the base 10 with the pallet 60 , tip portions 41a to 41f of the presser plate 40 are able to pass through the central opening of the pallet 60 successfully.

The large cylindrical portion 18 is composed of an outer shape of the body of the base 10, it is located so as to surround the middle cylindrical portion 17. The large cylindrical portion 18 has notches 19a to 19f, which are formed in order to insert a drill from the horizontal direction, when machining the groove portions 13a to 13f.

In near the notches 19b, 19d and 19f, bolt holes for fixing the base 10 to the table 70 are formed, the base 10 and the table 70 are fixed by bolts 11a to 11c passed through each bolt hole.

The ball support ring 20 prevents that the balls 12a to 12f drop out from the groove portions 13a to 13f. The ball support ring 20 is made of such as resin having some flexibility. The ball support ring 20 has the approximate shape of a ring. The cross section of the ring is an almost L shape.

The inner circumference of the ball support ring 20 has a size comparable to the outer circumference of the middle cylindrical portion 17. Strictly speaking, the inner circumference of the ball support ring 20 is made slightly smaller than the outer circumference of the middle cylindrical portion 17. And when the ball support ring 20 is attached to the middle cylindrical portion 17, the flexibility may be improved by such as heating the ball support ring 20.

The ball support ring 20 has the shape and the size as described above, so that the balls 12a to 12f housed in the groove portions 13a to 13f do not drop out from the groove portions 13a to 13f owing to be supported by the ball support ring 20.

In addition, since the balls 12a to 12f are supported by the ball support ring 20, in the case that the balls 12a to 12f themselves, the groove portions 13a to 13f or the recessed portions 62a to 62f are worn, instead of the balls 12a to 12f, it is easy to replace to new balls of the size corresponding to the wear. That is, by replacing the balls 12a to 12f to larger sized balls equivalent to the worn, it is possible to prevent occurrence of looseness when the pallet 60 and Base 10 are connected. Furthermore, since the ball support ring 20 has a flexible, it becomes possible to perform ball exchange itself easily.

The plate receiving ring 30 sandwiches Presser plate 40 together with the locknut 50. On the side surface of the plate receiving ring 30, for example, three screw holes 31a to 31c are provided. The plate receiving ring 30 is fixed to a lower cylinder 51 of Locknut 50 by screws 32a to 32c through the screw holes 31a to 31c.

In addition, although the plate receiving ring 30 and the locknut 50 are fixed each other by the screws 32a to 32c, it should be noted that the presser plate 40 is freely rotatable between them.

The presser plate 40 prevents that the pallet 60 is removed from the base 10 after mounting the pallet 60 against the base 10. More specifically, at the time of attachment of the pallet 60, the tip portions 41a to 41f extending radially pass through notch portions 64a to 64f which are located in the central opening of the pallet 60, after that, by rotating the presser plate 40 through the locknut 50, the tip portions 41a to 41f are able to be engaged with the lock portions 65a to 65f.

The locknut 50 prevents that the pallet 60 is removed from the base 10 together with the presser plate 40. The locknut 50 has an approximate cylindrical shape and four nail portions 53a to 53d are formed on the upper surface thereof. These are used in rotating the presser plate 40 using a tool (not shown).

On the cylinder inside of the locknut 50, the screw portion 52 is formed. The screw portion 52 is screwed with the threaded portion 15 of the small cylindrical portion 14 as described above. On the cylinder outside of the locknut 50, the plate receiving ring 30 is connected through the screws 32a to 32c.

The pallet 60 has an approximate disk-like shape. On the upper surface of the pallet 60, machine tool parts which are machined by a machine tool (not shown) are mounted. In addition, on the upper surface of the pallet 60, convex portions 66a to 66c for receiving the bottom of other pallet are formed, and on the bottom surface of the pallet 60, depressed portions for receiving the convex portions 66a to 66c are formed.

The height of the convex portions 66a to 66c may be equal to or higher than the height of machine tool parts which are mounted on the pallet 60. In addition, at the pallet 60, hole portions 67a and 67b are formed. These are used to pass poles which are used during the storing under a state of being stacked with other pallets.

On the central opening of the pallet 60, as described above, the notch portions 64a to 64f and the lock portions 65a to 65f are formed. On the bottom side of this opening, the semi-cylindrical recessed portions 62a to 62f are provided. These are pressed onto the balls 12a to 12f received in the base 10.

For the pallet clamping apparatus for machine tools shown in Fig. 1, the pallet 60 is detachable appropriately against such as the base 10. That is, the pallet clamping apparatus for machine tools is used in such a state where such as the base 10 are assembled and the base 10 is fixed to the table 70 of the machine tool.

Fig. 2 is a cross sectional view and a plan view after assembling the pallet clamping apparatus for machine tools shown in Fig. 1. Fig. 2 (a) shows a state before attaching the pallet 60 against the pallet clamping apparatus for machine tools. Fig. 2 (b) shows a state after mounting the pallet 60 against the pallet clamping apparatus for machine tools. Fig. 2 (c) shows an enlarged view of the vicinity of the presser plate 40 shown in Fig. 2 (b).

Next, an assembly method of the pallet clamping apparatus for machine tools shown in Fig. 1 is explained. First, the ball support ring 20 is fitted against the middle cylindrical portion 17 of the base 10. After that, the balls 12a to 12f are housed against the groove portions 13a to 13f where such as grease are applied.

And then, the presser plate 40 is sandwiched by the plate receiving ring 30 and the locknut 50. In this state, the locknut 50 is screwed to the small cylindrical portion 14. At this time, it is noted that the projection 43 is located between the stoppers 16a and 16b, and the tip portions 41a to 41f of the presser plate 40 are to be at Position A shown in Fig. 2 (c). Then, the base 10 is fixed against the table 70 through the bolts 11a to 11c. This state is the state shown in Fig. 2 (a).

Next, the pallet 60 is conveyed by a conveying apparatus (not shown), after aligning the pallet 60 and the base 10, the pallet 60 is moved down. In this way, the tip portions 41a to 41f pass through the notch portions 64a to 64f located in the central opening of the pallet 60.

After that, by applying a predetermined force from the top of the pallet 60, the recessed portions 62a to 62f are pressed against the balls 12a to 12f received in the base 10. As a result, the installation of the base 10 and the pallet 60 are completed. This state is the state shown in Fig. 2 (b).

However, for transportation and installation of the pallet 60, the performing by a conveying apparatus is not mandatory, such as the operator of the machine tool may perform.

Then, by using such as a tool (not shown) corresponding to the nail portions 53a to 53d of the locknut 50, locknut 50 is rotated. As a result, the tip portions 41a to 41f of the presser plate 40 are moved from Position A to Position B shown in Fig. 2 (c), and are engaged with the lock portions 65a to 65f, it is prevented that the pallet 60 is removed from the base 10.

After the desired machining is made against the machine tool parts on the pallet 60, by the reverse procedure to being explained using Fig. 2, the pallet 60 is removed from the base 10, and a pallet on which next machine tool parts are mounted is attached to the base 10.

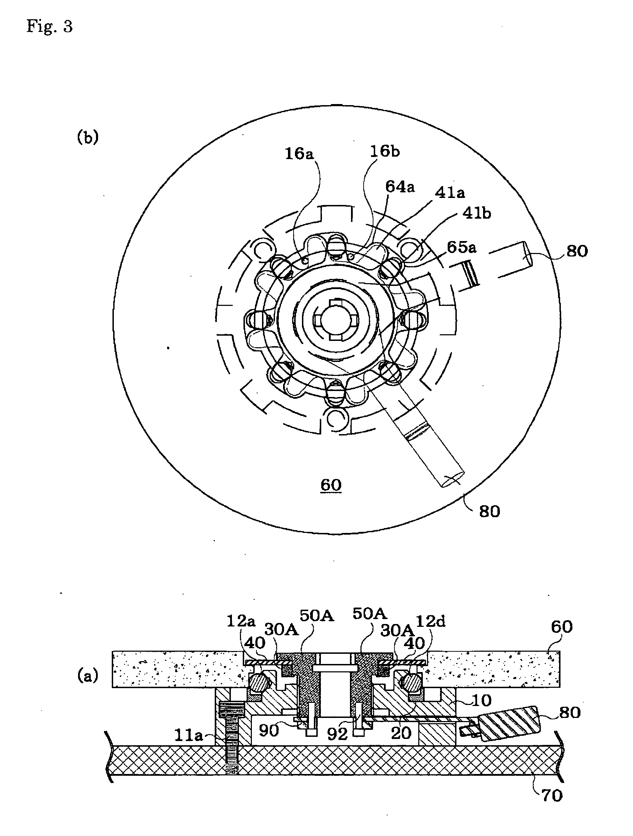

Fig. 3 is a cross sectional view and a plan view after assembling the pallet clamping apparatus for machine tools of another embodiment from the pallet clamping apparatus for machine tools shown in Fig. 2. In addition, in Fig. 3, the parts which are same as Fig. 2 are denoted by the same reference numbers.

First, as shown in Fig. 3 (a), for this pallet clamping apparatus for machine tools, the nail portions 53a to 53d protruding from the upper surface of the pallet 60 are ablated, alternatively, a lever 80 described later is provided. By ablating the nail portions 53a to 53d, large machine tool parts can be mounted on the pallet 60.

Next, the configuration of the pallet clamping apparatus for machine tools shown in Fig. 3 is explained. First, the locknut 50 and its incidental parts are explained. For the locknut 50, eave portion is located on the top, and stepped outer wall portions are formed at its lower part. Each outer wall portion is cut a male screw.

The presser plate 40 is attached to the locknut 50 in a rotatable manner. The vertical position of the presser plate 40 is defined by the plate receiving ring 30 which is cut a female screw into the inner wall portion. The plate receiving ring 30 has the inner wall portion which is cut a female screw. The plate receiving ring 30 is screwed against the male screw of the outer wall portion of large diameter of the locknut 50. However, the connection with the plate receiving ring 30 and the locknut 50 is not limited to screwing, it may be connected using an adhesive or the like. In addition, the male screw of the outer wall portion of small diameter of the locknut 50 is screwed against the female screw which is cut into the inner wall portion constituting a center opening of the base 10.

On the bottom surface of the locknut 50, in order to connect the lever 80 and the locknut 50 integrally, a plurality of bolt holes to be screwed are formed. The bolt 92 is screwed to each bolt hole. Here, for example, the bolts 92 and the bolt holes are 6 respectively, however, these numbers may be determined depending on the size of the locknut 50.

Each the bolt 92 is screwed against the bottom surface of the locknut 50. More specially, the locknut 50 is screwed against the base 10 after the presser plate 40 and the plate receiving ring 30 are attached, then, the lever 80 which is inserted through the space described later is aligned against the locknut 50, after the lever 80 is covered by the lever pressing 90, each the bolt 92 is screwed against the locknut 50.

Here, the lever 80 comprises the base end portion having a ring that corresponds to the lever pressing 90, the tip end portion applying a force when rotating the lever 80, and the handle portion connecting them. In addition, the lever pressing 90 has the approximate shape of a ring corresponding to the base end portion of the lever 80, and the bolt through holes where each the bolt 92 is passed through are formed near its center.

In addition, as shown in Fig. 3 (b), the pressing plate 40 has the same shape as that shown in Fig. 2. The rotational range of the pressing plate 40 is also defined by the stoppers 16a and 16b.

By screwing each bolt 92 against each bolt hole formed in the locknut 50, each bolt 92, lever 80, lever pressing 90 and locknut 50 are integrally connected. Therefore, by operating the lever 80, the locknut 50 can be also rotated.

Along the side surface of the base 10, the space where the handle portion of the lever 80 passes through is provided. Although the base 10 shown in Fig. 3 has similar functions as that shown in Fig. 2 such as housing a plurality of balls 12a etc., and being fixed through the bolt 11a etc. against the table 70, its shape is somewhat different from those shown in Fig. 2.

Then, the detachable method of the pallet 60 against the base 10 is explained. In this case, from the embodiment shown in Fig. 3, the example of removing the pallet 60 is explained, however, when the pallet 60 is mounted against the base 10, it may be the reverse procedure against the procedure explained below.

First, when the machining of the machine tool parts mounted on the pallet 60 is finished, such as the operator of the pallet clamping apparatus for machine tools shown in Fig. 3 rotate the tip end portion of the lever 80. As a result, since the lever 80 is integrally connected to the locknut 50, the locknut 50 is raised by being rotated against the base 10.

Here, although the pressing plate 40 is attached to the locknut 50, both are not in a fixed relationship. Therefore, the pressing plate 40 does not rotate immediately after rotating the tip end portion of the lever 80, because the friction force between the pressing plate 40 and the pallet 60 is bigger than the friction force between the pressing plate 40 and the plate receiving ring 30.

After that, when the rotation of the tip end portion of the lever 80 is continued, the locknut 50 is further raised against the base 10, shortly, the pressing plate 40 is rotated, because the friction force between the pressing plate 40 and the plate receiving ring 30 becomes bigger than the friction force between the pressing plate 40 and the pallet 60.

Accordingly, when the rotation of the tip end portion of the lever 80 is continued, although the locknut 50 is further raised against the base 10, the pressing plate 40 is rotated to the position of the stopper 16a. As a result, each of such as the tip portion 41a of the presser plate 40 is matched to each of such as the notch portion 64a of the center of the pallet 60.

Therefore, in this state, when an upward force is given against the pallet 60, the pallet 60 can be removed from the base 10:

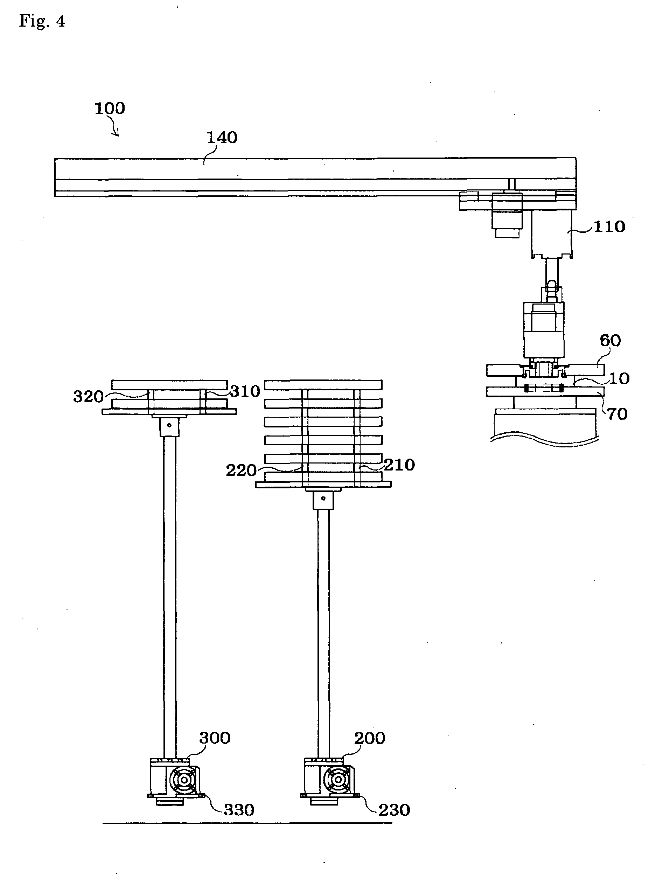

Fig. 4 is a schematic configuration diagram of pallet exchange system to attach or remove a pallet against the pallet clamping apparatus for machine tools shown in such as Fig. 1. In addition to the pallet clamping apparatus for machine tools described above, Fig. 4 shows a conveying apparatus 100, a first holding apparatus 200 and a second holding apparatus 300 described below.

The conveying apparatus 100 comprises a detachable means 120 for attaching or removing the pallet 60 against such as the base 10, a driving means 110 for performing a vertical movement for the detachable means 120, a first guiding means 130 for guiding the driving means 110 toward back forward direction of the drawing, and a second guiding means 140 for guiding such as the driving means 110 toward lateral direction of the drawing.

The first holding apparatus 200 is also referred to as a so-called pallet pool, and comprises poles 210 and 220 for passing through hole portions 67a and 67b formed in the pallet 60, and a lifting means 230 for raising or lowering such as the pallet 60 which are passed through the poles 210 and 220.

The second holding apparatus 300 has the same configuration as the first holding apparatus 200, therefore, it comprises the poles 310 and 320 and the lifting means 330 corresponding to the poles 210 and 220, and the lifting means 230. However, the first holding apparatus 200 and the second holding apparatus 300 can also be used as different configurations.

Then, the behavior of pallet exchange system shown in Fig. 4 is explained. First, a plurality of pallets 60 which are mounted machine tool parts are prepared, and they are held in the first holding apparatus 200.

In this state, when the pallet exchange system shown in Fig. 4 is actuated, the detachable means 120 of the conveying apparatus 100 is moved to above the first holding apparatus 200, and the detachable means 120 is moved downward by the driving means 110, after that, the pallet 60 of the uppermost stage held by the first holding apparatus 200 is held.

Next, the detachable means 120 is raised by the driving means 110, then, the pallet 60 is conveyed above such as the base 10 mounted on the _table 70 through the first guiding means 130 guide portion and the second guiding means 140. In addition, at the first holding apparatus 200, one sheet of pallet is raised by the lifting means 230.

After that, the detachable means 120 is lowered by the driving means 110. By the method described above, the pallet 60 is connected and fixed against such as the base 10 via the balls 12a to 12f. As a result, the machining for machine tool parts mounted on the pallet 60 can be performed.

In fact, after performing the machining treatment against machine tool parts, the pallet 60 is removed from such as the base 10 by the conveying apparatus 100, and is conveyed above the second holding apparatus 300. Then, the hole portions 67a and 67b of the pallet 60 are aligned against the poles 310 and 320 of the second holding apparatus 300, after that, the detachable means 120 is lowered. Then, in the second holding apparatus 300, a piece of pallet is lowered by the lifting means 330.

Similarly, the pallet stacked on the first holding apparatus 200 is conveyed to the machine tool, sequentially, by the conveying apparatus 100, after the completion of machining treatment, it is stacked on the second holding apparatus 300.

## Claims

1. A pallet clamping apparatus for machine tools to clamp a pallet (60) for machine tools which is having an opening at a center and is mounted machine tool parts on an upper surface near the opening against a table (70) of a machine tool, comprising;
a base (10) with a cylindrical portion (17) having a side wall portion
**characterized in that** the pallet clamping apparatus also comprises:
several groove portions (13a -13f) formed in said side wall portion,
hard balls (12a - 12f) pressed into recessed portions (62a - 62f) which are formed on bottom corners of an opening of the pallet (60) for machine tools together with being housed in the groove portions (13a - 13f), and
a flexible ball support ring (20) fitted against the cylindrical portion (17) for preventing that the hard balls (12a - 12f) are dropped from the groove portions (13a - 13f) under a condition not to disturb an exchange to other hard balls from the hard balls.

2. Method of using the pallet clamping apparatus for machine tools as claimed in Claim 1, wherein the other hard balls are changed when the hard balls (12a - 12f) themselves, the groove portions (13a - 13f) or the recessed portions have worn, and are hard balls of a size corresponding to the wear.

3. A pallet for machine tools with the pallet clamping apparatus for machine tools as claimed in Claim 1 and connected thereto, wherein some recessed portions are formed on the bottom corners of the opening located in the center.

4. A pallet exchange system comprising;
the pallet clamping apparatus for machine tools as claimed in Claim 1,
a first holding apparatus (200) for holding a pallet (60) for machine tools mounted machine tool parts prior to being machined by a machine tool,
a second holding apparatus (300) for holding a pallet for machine tools mounted machine tool parts after being machined by the machine tool,
a conveying apparatus (100) for conveying a pallet for machine tools held by the first holding apparatus to the pallet clamping apparatus for machine tools, and for conveying the pallet for machine tools to the second holding apparatus after being machined by the machine tool.

## Patentansprüche

1. Palettenklemmvorrichtung, damit Bearbeitungswerkzeuge eine Palette (60) für Bearbeitungswerkzeuge einklemmen können, die eine Öffnung an einem Zentrumspunkt aufweist und auf Bearbeitungswerkzeugteilen auf einer oberen Fläche nahe der Öffnung gegen einen Tisch (70) eines Bearbeitungswerkzeugs angebracht ist, umfassend:
eine Basis (10) mit einem Zylinderabschnitt (17), die einen Seitenwandabschnitt aufweist,
**dadurch gekennzeichnet, dass** die Palettenklemmvorrichtung auch folgendes umfasst:
mehrere Nutabschnitte (13a-13f), die im Seitenwandabschnitt ausgebildet sind,
harte Bälle (12a-12f), die in ausgesparte Abschnitte (62a-62f) gepresst sind, die auf Bodenecken einer Öffnung der Palette (60) für Bearbeitungswerkzeuge ausgebildet sind und ferner in den Nutenabschnitten (13a-13f) aufgenommen sind, und wobei
ein flexibler Balltragering (20) zum Verhindern, dass die harten Bälle (12a-12f) von den Nutabschnitten (3a-13f), die gegen den Zylinderabschnitt (17) gepasst sind, fallen gelassen werden, unter der Maßgabe, dass ein Austausch gegen andere harte Bälle von den harten Bällen nicht beeinträchtigt wird.

2. Verfahren zum Verwenden der Palettenklemmvorrichtung für Bearbeitungswerkzeuge nach Anspruch 1, wobei die anderen harten Bälle ausgetauscht werden, wenn die harten Bälle (12a-12f) selbst, die Nutabschnitte (13a-13f) oder die ausgesparten Abschnitte abgenutzt sind, und wobei sie harte Bälle von einer Größe sind, die der Abnutzung entspricht.

3. Palette für Bearbeitungswerkzeuge mit der Palettenklemmvorrichtung für Bearbeitungswerkzeuge nach Anspruch 1 und damit verbunden, wobei in den Bodenecken der Öffnung im Zentrumspunkt einige ausgesparte Abschnitte ausgebildet sind.

4. Palettenaustauschsystem, umfassend:
die Palettenklemmvorrichtung für Bearbeitungswerkzeuge nach Anspruch 1,
eine erste Haltevorrichtung (200) zum Halten einer Palette (60) für Bearbeitungswerkzeug-montierte Bearbeitungswerkzeugteile vor deren Bearbeitung durch ein Bearbeitungswerkzeug,
eine zweite Haltevorrichtung (200) zum Halten einer Palette (60) für Bearbeitungswerkzeug-montierte Bearbeitungswerkzeugteile vor deren Bearbeitung durch ein Bearbeitungswerkzeug,
eine zweite Haltevorrichtung (300) zum Halten einer Palette (60) für Bearbeitungswerkzeug-montierte Bearbeitungswerkzeugteile nach deren Bearbeitung durch ein Bearbeitungswerkzeug,
eine Fördervorrichtung (100) zum Fördern einer Palette für Bearbeitungswerkzeuge, die von der ersten Haltevorrichtung gehalten wird, zur Palettenklemmvorrichtung für Bearbeitungswerkzeuge, und zum Fördern der Palette für Bearbeitungswerkzeuge zur zweiten Haltevorrichtung nach der Bearbeitung durch das Bearbeitungswerkzeug.

## Revendications

1. Appareil de serrage de palette pour machine-outil pour serrer une palette (60) pour machine-outil qui présente une ouverture à un centre et des parties de machine-outil sont montées sur une surface supérieure près de l'ouverture contre une table (70) d'une machine-outil, comprenant :
une base (10) avec une portion cylindrique (17) ayant une portion de paroi latérale ;
**caractérisé en ce que** l'appareil de serrage de palette comprend également :
plusieurs portion de rainure (13a - 13f) formées dans ladite portion de paroi latérale,
des billes dures (12a - 12f) pressées dans des portions évidées (62a - 62f) qui sont formées sur des coins de fond d'une ouverture de la palette (60) pour machine-outil et en étant logées dans les portions de rainure (13a - 13f), et
une bague de support de bille flexible (20) ajustée contre la portion cylindrique (17) pour empêcher que les billes dures (12a - 12f) tombent des portions de rainure (13a - 13f) sous une condition pour ne pas perturber un échange avec d'autres billes dures des billes dures.

2. Procédé d'utilisation de l'appareil de serrage de palette pour machine-outil selon la revendication 1, dans lequel les autres billes dures sont échangées lorsque les billes dures (12a - 12f) elles-mêmes, les portions de rainure (13a - 13f) des portions évidées sont usées, et sont des billes dures d'une taille correspondant à l'usure.

3. Palette pour machine-outil avec l'appareil de serrage de palette pour des machines-outils selon la revendication 1 et connectée à celle-ci, où quelques portions évidées sont formées sur les coins de fond de l'ouverture située dans le centre.

4. Système d'échange de palette comprenant :
l'appareil de serrage de palette pour des machines-outils selon la revendication 1,
un premier appareil de retenue (200) pour retenir une palette (60) pour des parties de machine-outil montées sur la machine-outil avant d'être usinées par une machine-outil,
un deuxième appareil de retenue (300) pour retenir une palette pour des parties de machine-outil montées sur la machine-outil après avoir été usinées par la machine-outil,
un appareil de convoyage (100) pour convoyer une palette pour machine-outil retenue par le premier appareil de retenue à l'appareil de serrage de palette pour machine-outil, et pour convoyer la palette pour machine-outil au deuxième appareil de retenue après avoir été usinée par la machine-outil.
